# EUROPÄISCHE PATENTSCHRIFT

(11) **EP 3 341 101 B1**
(45) Veröffentlichungstag und Bekanntmachung des Hinweises auf die Patenterteilung: **06.01.2021**
(21) Anmeldenummer: 16760665.6
(22) Anmeldetag: 17.08.2016
(51) Int. Cl.: B01D 19/00, F15B 21/04

(54) **EINRICHTUNG ZUR ENTGASUNG EINER FLÜSSIGKEIT**
DEVICE FOR DEGASSING A LIQUID
DISPOSITIF POUR DÉGAZER UN LIQUIDE

(30) Priorität: 25.08.2015 DE 102015216173
(43) Veröffentlichungstag der Anmeldung: 04.07.2018
(73) Patentinhaber: Robert Bosch GmbH, 70442 Stuttgart (DE)
(72) Erfinder: GUENDER, Andreas, 97729 Ramsthal (DE); BORGSTEDT, Juergen, 59514 Welver (DE); MUEHLHAUSEN, Mark-Patrick, 63739 Aschaffenburg (DE); MAIER, Ralf, 97788 Neuendorf (DE); HUETTL, Rene, 09116 Chemnitz (DE)
(86) Internationale Anmeldenummer: PCT/EP2016/069470
(87) Internationale Veröffentlichungsnummer: WO 2017/032656

(56) Entgegenhaltungen:
- EP-A1- 0 080 420
- EP-A1- 0 531 855
- EP-A1- 1 095 686
- DE-A1- 2 419 676
- DE-A1-102011 009 044
- GB-A- 2 479 130
- US-A- 4 269 567

## Beschreibung

### Geänderte Beschreibung

Die Erfindung betrifft eine hydraulische Einrichtung zur Entgasung einer Flüssigkeit, insbesondere zur Entgasung von Hydraulikfluids. Die Einrichtung umfasst einen Motor und eine von dem Motor angetriebene Pumpe, von der aus zu entgasende Flüssigkeit über eine Düse strömt, an die sich ein Strömungskanal mit einem gegenüber dem Durchflussquerschnitt der Düse wesentlich größeren Querschnitt anschließt. Das Hydraulikfluid ist üblicherweise ein Hydrauliköl.

Im Hydraulikfluid enthaltene Luft stellt in Hydraulikanlagen aus unterschiedlichen Gründen ein Problem dar. Je höher der freie oder ungelöste Luftanteil ist, desto größer ist die an sich unerwünschte Kompressibilität des Hydrauliköls. Sind in dem Hydrauliköl, das die Pumpe ansaugt, auch Luftblasen enthalten, so kann das zu einem schlechten Wirkungsgrad und zu einem hohen Geräuschpegel führen. Je mehr freie Luft sich in Hydrauliköl befindet, desto schneller altert das Hydrauliköl. Im Allgemeinen versucht man, durch einen großzügig dimensionierten Vorratsbehälter mit entsprechend großer Verweildauer des hydraulischen Druckmittels die in einer hydraulischen Anlage auftretenden Luftbläschen aus dem im Vorratsbehälter befindlichen Hydrauliköl aufsteigen und ausgasen zu lassen. Dieser Prozess kann je nach Größe der Luftblasen relativ langsam ablaufen.

Es ist auch schon vorgeschlagen worden, die Ausgasung des Hydraulikfluids durch die Einwirkung von Ultraschall oder durch die Erzeugung eines Unterdruckes zu beschleunigen und zu vervollkommnen. Will man eine Entgasung durch Ultraschall oder ein Vakuum fördern, so sind zusätzliche Gerätschaften erforderlich, die Kosten verursachen, die Störanfälligkeit erhöhen und gegebenenfalls Energie verbrauchen. Außerdem können die Methoden eine zusätzliche Ölbelastung verursachen.

Aus der CN 203023182 U ist schon ein System zur Entgasung von Hydrauliköl bekannt, bei der von einer Pumpe aus einem Tank angesaugtes und gefördertes Hydrauliköl über eine Düsenanordnung zu dem Tank zurückströmt. Nach dem Durchströmen der Düsenanordnung kann Luft, die in dem Hydrauliköl enthalten ist, durch Kavitation separiert und durch eine, wie es in der Druckschrift heißt, Entgasungsvorrichtung abgeführt werden.

Aus der CN 1087375 ist eine hydraulische Anlage bekannt, bei der ein Ölbehälter durch eine bis zu einer bestimmten Höhe reichende Trennwand in zwei Teilräume aufgeteilt ist. Eine erste Hydraulikpumpe saugt bodenseitig aus dem einen Teilraum des Ölbehälters Hydrauliköl an. Eine zweite Pumpe fördert über ein Drosselelement Hydrauliköl bodenseitig in den zweiten Teilraum hinein, wobei sich nach dem Drosselelement Luftblasen bilden, die in dem sich in dem zweiten Teilraum befindlichen Öl aufsteigen und abgesaugt werden. Der Ölstand in dem zweiten Teilraum ist durch die Höhe der Trennwand bestimmt.

Die DE 2 419 676 offenbart eine so genannte Gasdesorptionsvorrichtung zum Austreiben von Gas aus einer Flüssigkeit, die sich hinter einer Düse in einem Desorptionsrohr der Vorrichtung radial ausbreitet. Das Desorptionsrohr mündet in einen Behälter, in dem unten Flüssigkeit und oben Gas sind. Das Desorptionsrohr kann von oben in den Gasbereich des Behälters oder von unten in den Flüssigkeitsbereich des Behälters münden.

Zusätzlich offenbart EP0531855A1 noch eine Gasdesorptionsvorrichtung.

Der Erfindung liegt die Aufgabe zugrunde, eine Einrichtung zu schaffen, die eine hochwirksame, kostengünstige und rasche Entgasung eines Hydraulikfluids ermöglicht.

Die Aufgabe wird mit einer Einrichtung nach Anspruch 1 gelöst, die eine Antriebseinheit mit einem Motor und mit einer von dem Motor antreibbaren Pumpe, eine Düse, über die die von der Pumpe geförderte und zu entgasende Flüssigkeit strömt, und einen Strömungskanal umfasst, der sich stromab an die Düse anschließt und gegenüber dem Durchflussquerschnitt der Düse einen wesentlich größeren Querschnitt hat, wobei die Antriebseinheit, die Düse und der Strömungskanal zu einem als Ganzes handhabbaren Entgasungsmodul zusammengefasst sind. Erfindungsgemäß ist der Entgasungsmodul zur Montage auf oder an einem Flüssigkeitshaupttank ausgebildet, wobei er sich zumindest teilweise in dem Flüssigkeitshaupttank befindet.

Die mit einem erfindungsgemäßen Entgasungsmodul erreichte Entgasung fußt auf der Erscheinung der Superkavitation. Dabei sind die über die Düse strömende Fluidmenge und der Durchflussquerschnitt der Düse derart aufeinander abgestimmt, dass stromab der Düse in dem Strömungskanal ein Flüssigkeitsstrahl erzeugt wird, der von einem zusammenhängenden Gebiet aus Flüssigkeitsdampf und Luft umgeben ist. Stromab der Düse tritt also Superkavitation auf. Von Superkavitation spricht man üblicherweise dann, wenn ein sehr schnell durch eine Flüssigkeit bewegter Körper rundum von Dampf dieser Flüssigkeit umgeben ist. Man hat dann in einer Richtung senkrecht zur Richtung der relativen Bewegung zwischen Festkörper und Flüssigkeit zentral einen Festkörper, an dessen Außenseite einen gasgefüllten Bereich und dann die Flüssigkeit. Beim erfindungsgemäßen Entgasungsmodul liegt eine inverse Anordnung vor. Im Zentrum befinden sich der Flüssigkeitsstrahl und damit die Flüssigkeit. Der Flüssigkeitsstrahl ist von einem gasgefüllten Bereich umgeben, der durch den den Strömungskanal bildenden Festkörper begrenzt wird. Beim Kondensieren der Flüssigkeit in dem Dampfgebiet entstehen verhältnismäßig große Luftblasen. Diese können leicht abgeschieden werden, was zu einer raschen Entgasung des Öls führt.

Vorteilhafte Ausgestaltungen einer erfindungsgemäßen Entgasungseinrichtung kann man den Unteransprüchen entnehmen.

Für das den Strömungskanal ausbildende Bauteil ist eine Umhausung vorgesehen, die eine Öffnung zur Umgebung hat, über die entstandene Gasblasen in die Umgebung, insbesondere nicht erst in einen Haupttank, sondern direkt in die Atmosphäre gelangen. Der Öffnung kann ein Lüfter zugeordnet sein, welcher das Gas vom Innenraum der Umhausung Richtung Umgebung fördert. Hierbei ist eine zweite, insbesondere mit einem Luftfilter versehene Öffnung für einströmende Luft vorteilhaft.

Die noch innerhalb des Strömungskanals kondensierte Flüssigkeit und die verbleibenden Gasblasen gelangen am von der Düse entfernten Ende des Strömungskanals in die Umhausung.Das Niveau der Flüssigkeit in der Umhausung wird so hoch gehalten, dass zumindest das von der Düse entfernte Ende des Strömungskanals in die Flüssigkeit eintaucht. Insbesondere taucht wenigstens annähernd das gesamte Rohr in die Flüssigkeit ein. Dadurch wird im Betrieb der Einrichtung der Geräuschpegel niedrig gehalten.

Das Flüssigkeitsniveau innerhalb der Umhausung wird auf einfache Weise durch einen Überlauf konstant gehalten werden, wobei die Einrichtung natürlich so anzuordnen ist, dass sich das Niveau des Überlaufs über dem Niveau der Flüssigkeit in dem Haupttank befindet.

Der Überlauf wird durch eine Überlaufleitung gebildet, die von innerhalb der Umhausung durch eine Durchführung hindurch nach außen geführt ist und vorzugsweise unterhalb der Umhausung endet.

Damit die Pumpe hauptsächlich nicht gerade entgastes Öl ansaugt, ist es vorteilhaft, wenn das Ende der Überlaufleitung einen großen Abstand vom freien Ende einer Saugleitung der Pumpe hat. Es ist deshalb vorteilhaft, wenn die Überlaufleitung und die Saugleitung derart geführt sind, dass der Abstand zwischen dem freien Ende der Saugleitung und dem sich außerhalb der Umhausung befindlichen Ende der Überlaufleitung in einer horizontalen Richtung betrachtet größer ist als der Abstand, den die Überlaufleitung im Bereich ihrer Durchführung durch die Umhausung von der Saugleitung hat.

Die Saugleitung der Pumpe und die Überlaufleitung können ausgehend von der Durchführung der Überlaufleitung durch die Umhausung zunächst parallel zueinander verlaufen. Vorteilhafterweise ist dann ein Endabschnitt der Überlaufleitung von der Saugleitung weggebogen. Grundsätzlich kann auch die Saugleitung weggebogen sein. Es ist für das Saugverhalten der Pumpe jedoch günstig, wenn die Saugleitung möglichst wenig gebogen ist.

Die Überlaufleitung kann auch durch einen flexiblen Schlauch gebildet sein. Dieser kann sehr lang sein und deshalb mit seinem Ende innerhalb eines Haupttanks weit weg von der Saugleitung der Pumpe gelegt werden, ohne dass eine Montage des Entgasungsmoduls in einer Montageöffnung eines Haupttanks behindert würde.

Besonders bevorzugt ist auch die Pumpe innerhalb der Umhausung unterhalb des Flüssigkeitsniveaus angeordnet. Diese Ausbildung trägt ebenfalls dazu bei, dass im Betrieb der Einrichtung der Geräuschpegel niedrig ist. Eine Saugleitung der Pumpe tritt durch eine Durchführung in der Umhausung hindurch nach außen. Sie kann unmittelbar in die sich in einem Haupttank befindliche Flüssigkeit eingetaucht sein. Dabei ist die Durchführung der Saugleitung vorteilhafterweise mittels einer elastisch nachgebenden Dichtung abgedichtet, so dass an der Durchführung ein Flüssigkeitsaustritt aus der Umhausung in den Haupttank verhindert ist. Außerdem findet durch die elastische Dichtung eine Schallentkopplung zwischen der Pumpe und der Umhausung statt.

Vorteilhafterweise ist der Bereich zwischen der Düse und dem Strömungskanal innerhalb der Umhausung unterhalb des Flüssigkeitsniveaus angeordnet. Dies trägt ebenfalls zur Geräuschminderung bei. Außerdem wird verhindert, dass durch eine Fügestelle zwischen der Düse und dem den Strömungskanal ausbildenden Bauteil Luft angesaugt wird.

Der Entgasungsmodul umfasst zumindest eine Pumpe mit einem vorzugsweise elektrischen Antriebsmotor sowie die Düse und das den Strömungskanal bildende Bauteil, die man zusammen auch als Entgasungseinheit bezeichnen kann. Zu dem Entgasungsmodul kann auch ein Hydraulikblock gehören, in dem oder an dem die Düse und weitere Ventile wie ein Druckbegrenzungsventil, das an den an den von der Pumpe zu der Düse führenden Fluidpfad angeschlossen ist, oder ein Ventil, durch das die Pumpe auf einen drucklosen Umlauf geschaltet werden kann, und Sensoren, wie zum Beispiel ein Drucksensor, mit dem der Druck stromauf der Düse erfasst wird, angeordnet sind. Eine von der Pumpe zu dem Hydraulikblock führende Druckleitung ist vorteilhafterweise als Schlauch ausgeführt, so dass eine Schwingungsübertragung von der Pumpe an den Hydraulikblock gering gehalten wird.

Der Hydraulikblock ist vorteilhafterweise elastisch mit weiteren Bauteilen mechanisch verbunden.

Der Entgasungsmodul umfasst vorteilhafterweise einen Montageflansch, an dem die Pumpe einschließlich des elektrischen Antriebsmotors, der Hydraulikblock und die Umhausung befestigt sind. Alle Befestigungen sind vorteilhafterweise so ausgebildet, dass die Übertragung von mechanischen Schwingungen gedämpft ist.

Eine Fügestelle zwischen der Düse und dem Strömungskanal sollte gut abgedichtet sein. Bei einer Undichtigkeit besteht die Möglichkeit, dass die Einrichtung wie eine Wasserstrahlpumpe arbeitet und Gas in die Flüssigkeit eingebracht wird.

Drei Ausführungsbeispiele eines erfindungsgemäßen Entgasungsmoduls zur Entgasung von Flüssigkeiten sind in den Zeichnungen im dargestellt. Die dargestellten Entgasungsmodule dienen der Entgasung von Hydrauliköl. Anhand der Zeichnungen wird die Erfindung nun näher erläutert.

### Es zeigen

- Figur 1: das erste Ausführungsbeispiel in einer Einzeldarstellung,
- Figur 2: das zweite Ausführungsbeispiel nach einer Montage an einem Tank für Hydrauliköl und
- Figur 3: das dritte Ausführungsbeispiel nach einer Montage an einem Tank für Hydrauliköl.

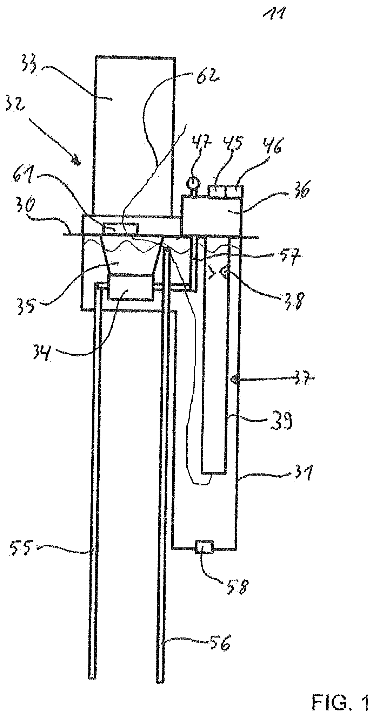

Der Entgasungsmodul 11 gemäß Figur 1 umfasst einen Montageflansch 30, an dem auf der einen Seite eine Umhausung 31 befestigt ist. Der Montageflansch 30 bildet zugleich einen Deckel für die Umhausung 31. An dem Montageflansch 30 sind außerdem eine Elektromotor-Pumpe-Kombination 32 mit einem Elektromotor 33, mit einer hydrostatischen Pumpe 34, die ein konstantes Hubvolumen hat, und mit einem Pumpenträger 35, über den die Pumpe 34 elastisch nachgiebig am Elektromotor 33 befestigt ist, ein Hydraulikblock 36 und eine Entgasungseinheit 37 mit einer Düse 38 und einem Rohr 39 befestigt. Von der Elektromotor-Pumpen-Kombination 32 ist der Pumpenträger 35, an dem auf der einen Seite der Elektromotor 33 und auf der anderen Seite die Pumpe 34 gehalten sind, an dem Montageflansch 30 befestigt, wobei sich die Pumpe 34 und der größte Teil des Pumpenträgers 35 in der Umhausung 31 befinden. Neben dem Elektromotor 33 und damit auf der der Umhausung 31 gegenüberliegenden Seite ist an dem Montageflansch 30 der Hydraulikblock 36 befestigt, an dem ein Druckbegrenzungsventil 45, ein Umlaufventil 46 für drucklosen Umlauf und ein Druckmessanzeiger 47 angeordnet sind. Der Hydraulikblock 36 ist elastisch mit dem Montagflansch 30 verbunden, damit eine Schwingungsübertragung vermieden ist.

Das Rohr 39 ist in den Hydraulikblock 36 eingeschraubt und ragt durch eine Öffnung in dem Montageflansch 30 hindurch weit in die Umhausung 31 hinein, wozu die Umhausung 31 neben dem flachen Bereich, der die Pumpe 34 aufnimmt, einen wesentlich tieferen Bereich zur Aufnahme des Rohrs 39 aufweist. Die Düse 38 ist als Zwischenstück in das Rohr 39 eingesetzt und kann mit den beiden Rohrabschnitten vor und hinter ihr verschraubt oder verschweißt sein.

Zu dem Entgasungsmodul 11 gehört ein Saugrohr 55, das in dem flachen Bereich durch den Boden der Umhausung 31 hindurchgeführt ist. Die Durchführung ist durch eine elastische Dichtung abgedichtet. Das Saugrohr 55 endet jenseits des Bodens des tieferen Bereichs der Umhausung 31.

Durch den Boden des flachen Bereichs der Umhausung 31 ist außer dem Saugrohr 55 ein Überlaufrohr 56 dicht hindurchgeführt. Dieses Überlaufrohr 56 ist fest mit dem Boden der Umhausung 31 verbunden und dadurch in Position gehalten. Das eine Ende des Überlaufrohrs 56 befindet sich in einem geringen Abstand unterhalb des Montageflansches 30, das andere Ende befindet sich auf Höhe des freien Endes des Saugrohrs 55. Durch die Position des einen offenen Endes des Überlaufrohres 56 innerhalb der Umhausung 31 ist das Ölniveau innerhalb der Umhausung 31 bestimmt. Das Zwischenstück des Rohres 39 mit der Düse 38 befindet sich unterhalb dieses Ölniveaus.

Der Druckanschluss der Pumpe 34 ist über eine nur schematisch dargestellte Schlauchleitung 57 mit einem Druckanschluss des Hydraulikblocks 36 verbunden, in dem der Druckfluidpfad zu dem Rohr 39 und zu der Düse 38 fortgeführt ist. Innerhalb des Hydraulikblocks 36 sind das Druckbegrenzungsventil 45, das Umlaufventil 46 und der Druckmessanzeiger 47an den Druckfluidpfad angeschlossen. Die Ausgänge des Druckbegrenzungsventils 45 und des Umlaufventils 46 sind mit einem Tankanschluss des Hydraulikblocks 36 verbunden, von dem aus Hydrauliköl in die Umhausung 31 abfließen kann.

Der Hydraulikblock 36 ist über nicht näher dargestellt elastische Mittel mechanisch mit dem Montageflansch 30 verbunden.

Im Boden des tieferen Bereichs der Umhausung 31 befindet sich eine Ölablassschraube 58, damit bei einer Demontage des Entgasungsmoduls 11 das Hydrauliköl aus der Umhausung 31 abgelassen werden kann.

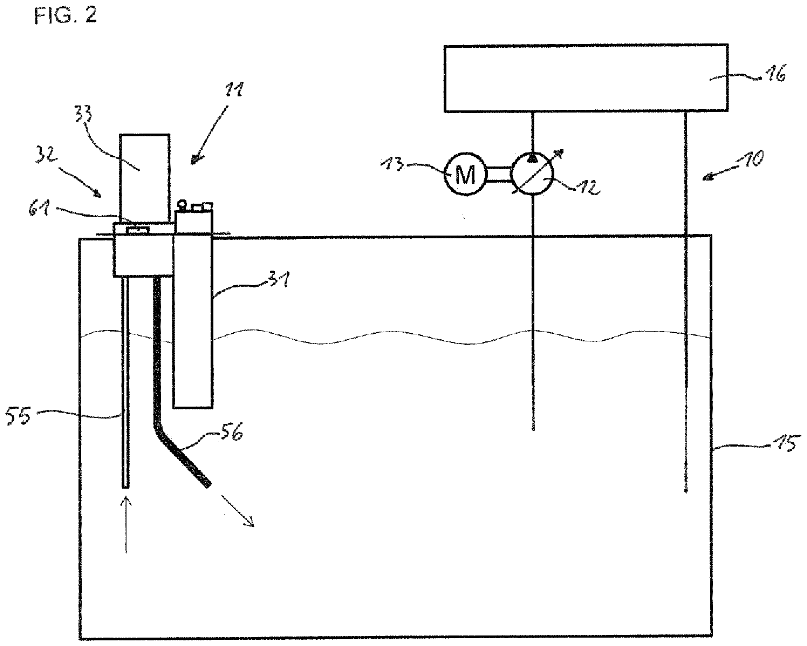

Die hydraulische Anlage gemäß Figur 2 umfasst einen hydraulischen Arbeitskreis 10. Zu diesem gehören eine hydrostatische Hauptpumpe 12 in Verdrängerbauart, die in ihrem Hubvolumen verstellbar ist und von einem Motor 13, der zum Beispiel ein Verbrennungsmotor oder ein Elektromotor ist, antreibbar ist. Von der Verdrängerpumpe 12 wird ein hydraulisches Equipment 16, zu dem ein oder mehrere hydraulische Verbraucher und gegebenenfalls ein oder mehrere Hydraulikventile gehören, mit einem Hydrauliköl versorgt. Die Verdrängerpumpe 12 saugt das den hydraulischen Verbrauchern zufließende Hydrauliköl aus einem Tank 15 an, in den das von den hydraulischen Verbrauchern abfließende Hydraulikfluid zurückströmt. Während das Hydrauliköl den skizzierten Kreislauf durchläuft, wird es mit Luft angereichert. Das Ölniveau in dem Haupttank 15 liegt je nachdem, wie viel Öl sich in dem hydraulischen Equipment 16 befindet, zwischen einem maximalen Niveau und einem minimalen Niveau.

In eine Öffnung einer Decke des Tanks 15 ist der Entgasungsmodul 11 eingesetzt und mit dem über die Öffnung überstehenden Montageflansch 30 an der Decke befestigt. Der Entgasungsmodul 11 gemäß Figur 2 ist bis auf einen kleinen Unterschied gleich dem in Figur 1 dargestellten Entgasungsmodul 11. Anders als bei dem Entgasungsmodul 11 nach Figur 1 ist bei dem Entgasungsmodul 11 aus Figur 2 die Überlaufleitung nicht ein völlig gerades, sondern ein abgeknicktes Rohr 56. Ausgehend von ihren Durchführungen durch den Boden des flachen Teils der Umhausung 31verlaufen das Saugrohr 55 und das Überlaufrohr 56 zunächst parallel zueinander und in dieselbe Richtung wie das Rohr 39, nämlich vertikal in Richtung der Gravitationskraft. Unterhalb des Bodens des tiefen Teils der Umhausung 31 ist ein Endabschnitt des Überlaufrohres 56 abgeknickt und verläuft schräg vom Saugrohr 55 weg. Das Ende des Überlaufrohrs 56 verbleibt jedoch noch innerhalb eines durch die Fläche der Öffnung im Haupttank 15 definierten geraden Zylinders, so dass sich die Rohre 55 und 56 und die Umhausung 31 leicht senkrecht durch die Öffnung in den Haupttank 15 hinein bewegen lassen. Durch die Abbiegung des Überlaufrohres 56 wird der Abstand von dessen außerhalb der Umhausung 31 befindlichen, freien Ende zum freien Ende des Saugrohres 55 groß, so dass entgastes Öl, das durch das Überlaufrohr 56 in den Haupttank 15 gelangt, nicht gleich wieder von der Pumpe 34 über das Saugrohr 55 angesaugt wird.

Das Saugrohr 55 der Pumpe 34 und das Überlaufrohr 56 des Entgasungsmoduls 11 sind so lang, dass sie unterhalb des minimalen Ölniveaus im Haupttank 15 enden und somit immer in das im Haupttank 15 enthaltene Hydrauliköl eintauchen.

Der Innerraum der Umhausung 31 ist über eine Öffnung in der parallel zu dem Montageflansch 30 verlaufenden Oberseite mit der Umgebung außerhalb des Haupttanks 15 verbunden. Der Öffnung ist ein Luftfilter 61 zugeordnet, der den Innenraum der Umhausung 31 vor allem, wenn der Entgasungsmodul 11 nicht in Betrieb ist, vor Verschmutzung von außen schützt.

Im Entgasungsbetrieb saugt die Pumpe 34 über das Saugrohr 55 Hydrauliköl aus dem Haupttank 15 an und fördert es über die Leitung 57 in den Hydraulikblock 36. Das Hydrauliköl fließt über die Düse 38, wobei sich über die Düse 38 ein Druckabfall einstellt, der durch die Fördermenge der Pumpe 34 und den Durchflusswiderstand der Düse 38 bestimmt ist. Fördermenge und Durchflusswiderstand sind derart aufeinander abgestimmt, dass stromab der Düse 38 durch Superkavitation ein Flüssigkeitsstrahl erzeugt wird, der über eine gewisse Strecke von einem zusammenhängenden Gebiet aus Flüssigkeitsdampf, im vorliegenden Fall Öldampf, und Luft umgeben ist. An dieses Gebiet schließt sich aufgrund des Kondensierens von verdampftem Öl ein Gebiet mit Schaum an, das ebenfalls den mittigen Flüssigkeitsstrahl umgibt. Schließlich ist alles Öl kondensiert und man hat eine Flüssigkeit, in der sich große Luftblasen befinden. Das so entstandene Gemisch aus Öl in flüssiger Form und Gasblasen tritt am Ende des Rohres 39 in die Umhausung 31 ein, durch die ein Hilfstank gebildet ist, in dem das Hydraulikölniveau konstant ist. Dieses Niveau ist durch die Position des oberen Endes des Überlaufrohres 56 bestimmt. Dabei ist der Überlauf so angeordnet, dass das sich einstellende Hydraulikölniveau oberhalb der Pumpe 34 und oberhalb der Düse 38, aber im Abstand zur oberen Wand der Umhausung 31 liegt.

Die entstandenen Luftblasen verlassen das Rohr 39 und steigen innerhalb der Umhausung 31 nach oben und können durch den Luftfilter 61 nach außen in die Umgebung außerhalb des Haupttanks 15 entweichen. In Figur 1 ist der Weg der Luftblasen durch eine Linie 62 angedeutet.

Da im Tank üblicherweise Atmosphärendruck herrscht, lässt sich die Druckdifferenz über die Düse 38 zum Beispiel dadurch einstellen, dass die Pumpe 34 mit einem konstanten Hubvolumen von dem Elektromotor 33 mit einer bestimmten Drehzahl angetrieben wird. Dadurch stellt sich ein bestimmter Volumenstrom ein, der mit einem bestimmten Durchflussquerschnitt der Düse 38 die gewünschte Druckdifferenz über die Düse 38 ergibt. Es kann anstelle der Pumpe 34 auch eine Pumpe mit einem verstellbaren Hubvolumen und mit einer Druckregelung verwendet werden. Der Volumenstrom ergibt sich dann durch den gewählten Öffnungsquerschnitt der Düse 38 und den am Druckregler eingestellten Pumpendruck. Allgemein führt ein großer Volumenstrom zu einer schnelleren Entgasung, jedoch auch zu einem erhöhten Wärmeeintrag in das Öl. Durch einen kleinen Volumenstrom kann der Wärmeeintrag verringert werden. Die Abstimmung zwischen Entgasungsgeschwindigkeit und Wärmeeintrag erfolgt in Abhängigkeit von der jeweiligen Anlage. Eine Druckregelung der Pumpe 34 ist vor allem dann vorteilhaft, wenn die Drehzahl des Motors 33 stark variiert.

Zur Verbesserung des Entweichens der Luft kann dem Luftfilter 61 ein motorgetriebener Lüfter zugeordnet sein, der die Luft innerhalb der Umhausung aktiv in Richtung Umgebung fördert, oder es kann ein zweiter Luftfilter mit einem motorgetriebenen Lüfter installiert sein.

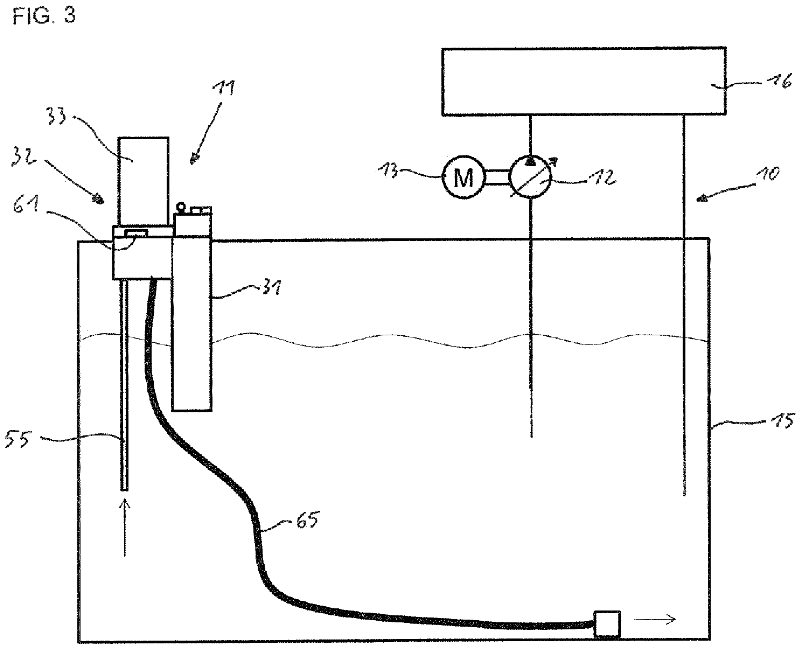

Die hydraulische Anlage gemäß Figur 3 umfasst genauso wie die hydraulische Anlage gemäß Figur 2 einen hydraulischen Arbeitskreis 10. Zu diesem gehören wiederum eine hydrostatische Hauptpumpe 12 in Verdrängerbauart, die in ihrem Hubvolumen verstellbar ist und von einem Motor 13, der zum Beispiel ein Verbrennungsmotor oder ein Elektromotor ist, antreibbar ist. Von der Verdrängerpumpe 12 wird ein hydraulisches Equipment 16, zu dem ein oder mehrere hydraulische Verbraucher und gegebenenfalls ein oder mehrere Hydraulikventile gehören, mit einem Hydrauliköl versorgt. Die Verdrängerpumpe 12 saugt das den hydraulischen Verbrauchern zufließende Hydrauliköl aus einem Tank 15 an, in den das von den hydraulischen Verbrauchern abfließende Hydraulikfluid zurückströmt. Während das Hydrauliköl den skizzierten Kreislauf durchläuft, wird es mit Luft angereichert. Das Ölniveau in dem Haupttank liegt je nachdem, wie viel Öl sich in dem hydraulischen Equipment befindet, zwischen einem maximalen Niveau und einem minimalen Niveau.

Auch bei dem Ausführungsbeispiel nach Figur 3 ist in eine Öffnung der Decke des Tanks 15 der Entgasungsmodul 11 eingesetzt und mit dem über die Öffnung überstehenden Montageflansch 30 an der Decke befestigt. Der Entgasungsmodul 11 gemäß Figur 3 ist bis auf einen kleinen Unterschied gleich den in den Figuren 1 und 2 dargestellten Entgasungsmodulen 11. Anders als bei den Entgasungsmodulen 11 nach den Figuren 1 und 2 ist bei dem Entgasungsmodul 11 aus Figur 3 die Überlaufleitung nicht ein völlig gerades oder ein abgeknicktes Rohr, sondern ein flexibler Überlaufschlauch 65, der wesentlich länger als das Saugrohr 55 ist. Das sich außerhalb der Umhausung 31 befindliche Ende des Überlaufschlauchs 65 kann sich in einem weit von dem Saugrohr 55 entfernten Bereich des Haupttanks 15 unterhalb des minimalen Ölniveaus des Haupttanks 15 befinden, so dass mit großer Sicherheit nicht gerade entgastes Hydrauliköl durch das Saugrohr 55 wieder angesaugt wird. Andererseits kann der Überlaufschlauch 65 ohne weiteres durch die Montageöffnung für den Entgasungsmodul 11 in der Decke des Haupttanks 15 in diesen eingeführt werden. Es ist ein Schlauch 65 von solcher Flexibilität gewählt, dass das kurze Stück innerhalb der Umhausung 31 senkrecht stehen und so das gewünschte Ölniveau innerhalb der Umhausung 31 erhalten bleibt.

Wenn hier in der Beschreibung oder in den Patentansprüchen die Angaben "oberhalb" oder "unterhalb" gebraucht werden, so ist dies bezüglich der Richtung der Gravitationskraft und in Gebrauchslage des Entgasungmoduls 11 zu verstehen.

Wie beschrieben gelangt bei den in den Figuren 1 bis 3 dargestellten Entgasungsmodulen 11 die abgeschiedene Luft aus der Umhausung 31 direkt in die Umgebung. Es ist jedoch auch ein Entgasungsmodul denkbar, dessen Umhausung mit ihrem oberen Rand einen Abstand zu einem Montagflansch hat und über einzelne Streben mit dem Montageflansch verbunden ist. Abgeschiedene Luft könnte dann in einen Haupttank entweichen und über eine Öffnung im Haupttank, die wegen des sich verändernden Ölniveaus im Haupttank ohnehin vorhanden ist, in die Umgebung gelangen.

### Bezugszeichenliste

- 10: hydraulischer Arbeitskreis
- 11: Entgasungsmodul
- 12: Hauptpumpe
- 13: Motor
- 15: Tank
- 16: hydraulisches Equipment
- 30: Montageflansch / weiteres Bauteil
- 31: Umhausung
- 32: Elektromotor-Pumpe-Kombination /Antriebseinheit
- 33: Elektromotor
- 34: Pumpe
- 35: Pumpenträger
- 36: Hydraulikblock
- 37: Entgasungseinheit
- 38: Düse
- 39: Rohr / Strömungskanal
- 45: Druckbegrenzungsventil
- 46: Umlaufventil
- 47: Druckmessanzeiger
- 55: Saugrohr
- 56: Überlaufrohr
- 57: Schlauchleitung
- 58: Ölablassschraube
- 61: Luftfilter
- 62: Linie
- 65: Überlaufschlauch

## Patentansprüche

1. Einrichtung zur Entgasung von Hydrauliköl und zur Anordnung auf oder an einem Tank von Hydrauliköl mit einer Antriebseinheit (32), die einen Motor (33) und eine von dem Motor (33) antreibbaren Pumpe (34) umfasst, von der aus zu entgasendes Hydrauliköl über eine Düse (38) strömt, an die sich ein Strömungskanal (39) mit einem gegenüber dem Durchflussquerschnitt der Düse (38) wesentlich größeren Querschnitt anschließt, wobei die Antriebseinheit (32), die Düse (38) und der Strömungskanal (39) zu einem als Ganzes handhabbaren Entgasungsmodul (11) zusammengefasst sind, wobei für das den Strömungskanal (39) ausbildende Bauteil eine mit dem Hydrauliköl gefüllte Umhausung (31) vorgesehen ist, die eine Öffnung zur Umgebung hat, über die entstandene Gasblasen in die Umgebung gelangen, wobei ein Ende des Strömungskanals (39) in das in der Umhausung (31) befindliche Hydrauliköl eintaucht, dessen Niveau in der Umhausung (31) mittels einer Überlaufleitung (56; 65) konstant gehalten ist, wobei eine die Düse (38) und den Strömungskanal (39) umfassende Entgasungseinheit (37) weit in das Hydrauliköl eintaucht, wobei die Überlaufleitung (56; 65) von innerhalb der Umhausung (31) durch eine Durchführung hindurch nach außen geführt ist.

2. Einrichtung nach Patentanspruch 1, wobei die entstandenen Gasblasen über die Öffnung direkt in die Atmosphäre gelangen.

3. Einrichtung nach Patentanspruch 2, wobei der Öffnung ein Lüfter zugeordnet ist, welcher das Gas vom Innenraum der Umhausung (31) in Richtung Umgebung fördert.

4. Einrichtung nach Patentanspruch 1, wobei die Überlaufleitung (56; 65) unterhalb der Umhausung (31) endet.

5. Einrichtung nach Patentanspruch 4, wobei an einen Sauganschluss der Pumpe (34) eine Saugleitung (55) angeschlossen ist, und wobei die Überlaufleitung (56; 65) und die Saugleitung (55) derart geführt sind, dass der Abstand zwischen dem freien Ende der Saugleitung (55) außerhalb der Umhausung (31) und dem sich außerhalb der Umhausung (31) befindlichen Ende der Überlaufleitung (56; 65) in einer horizontalen Richtung betrachtet größer ist als der Abstand, den die Überlaufleitung (56; 65) im Bereich ihrer Durchführung durch die Umhausung (31) von der Saugleitung (55) hat.

6. Einrichtung nach Patentanspruch 5, wobei die Saugleitung (55) der Pumpe (34) und die Überlaufleitung (56) ausgehend von der Durchführung der Überlaufleitung (56) durch die Umhausung (31) zunächst parallel zueinander verlaufen und ein Endabschnitt der Überlaufleitung (56) von der Saugleitung (55) weggebogen ist.

7. Einrichtung nach Patentanspruch 5, wobei die Überlaufleitung (65) durch einen flexiblen Schlauch gebildet ist.

8. Einrichtung nach einem der Patentansprüche 1 bis 7, wobei die Pumpe (34) innerhalb der Umhausung (31) unterhalb des Hydraulikölniveaus angeordnet ist und eine Saugleitung (55) der Pumpe (34) durch eine Durchführung in der Umhausung (31) hindurch nach außen tritt.

9. Einrichtung nach Patentanspruch 8, wobei die Durchführung der Saugleitung (55) mittels einer elastisch nachgebenden Dichtung abgedichtet ist.

10. Einrichtung nach einem vorhergehenden Patentanspruch, wobei das von der Pumpe (34) geförderte Hydrauliköl über einen Hydraulikblock (36) zu der Düse (38) gelangt und wobei eine von der Pumpe (34) zu dem Hydraulikblock (36) führende Druckleitung (57) als Schlauch ausgeführt ist.

11. Einrichtung nach einem vorhergehenden Patentanspruch, wobei ein Drucksensor (47) vorgesehen ist, mit dem der Druck stromauf der Düse (38) erfasst wird.

12. Einrichtung nach einem vorhergehenden Patentanspruch, wobei an den von der Pumpe (34) zu der Düse (38) führenden Fluidpfad ein Druckbegrenzungsventil (45) angeschlossen ist.

13. Einrichtung nach einem vorhergehenden Patentanspruch, wobei ein Hydraulikblock (36), in dem oder an dem sich die Düse (38) und/oder das Druckbegrenzungsventil (45) und/oder der Drucksensor (47) und/oder ein Ventil (46) für einen drucklosen Umlauf befinden, elastisch mit weiteren Bauteilen (30) mechanisch verbunden ist.

14. Einrichtung nach einem vorhergehenden Patentanspruch, wobei ein Montageflansch (30) vorhanden ist, an dem zumindest die Umhausung (31), die Düse (38) mitsamt dem den Strömungskanal (39) bildenden Bauteil und insbesondere auch die Pumpe (34) und der Hydraulikblock (36) befestigt sind.

15. Einrichtung nach einem vorhergehenden Patentanspruch, wobei eine Fügestelle zwischen der Düse (38) und dem Strömungskanal (39) abgedichtet ist.

## Claims

1. Device for degassing hydraulic oil and for arrangement on or at a tank of hydraulic oil, having a drive unit (32) which comprises a motor (33) and comprises a pump (34) which is able to be driven by the motor (33), from which pump hydraulic oil to be degassed flows via a nozzle (38) which is adjoined by a flow channel (39) with a cross section that is significantly larger in comparison with the throughflow cross section of the nozzle (38), wherein the drive unit (32), the nozzle (38) and the flow channel (39) are combined to form a degassing module (11) which is able to be handled as a whole, wherein, for the component forming the flow channel (39), there is provided an enclosure (31) which is filled with the hydraulic oil and which has an opening to the surroundings, via which opening gas bubbles which have formed pass into the surroundings, wherein one end of the flow channel (39) is immersed into the hydraulic oil situated in the enclosure (31), whose level in the enclosure (31) is kept constant by means of an overflow line (56; 65), wherein a degassing unit (37), comprising the nozzle (38) and the flow channel (39), is immersed into the hydraulic oil to a great extent, wherein the overflow line (56; 65) is guided from within the enclosure (31) to the outside through a passage.

2. Device according to Patent Claim 1, wherein the gas bubbles formed pass via the opening directly into the atmosphere.

3. Device according to Patent Claim 2, wherein a fan is assigned to the opening and conveys the gas from the interior of the enclosure (31) in the direction of the surroundings.

4. Device according to Patent Claim 1, wherein the overflow line (56; 65) ends below the enclosure (31).

5. Device according to Patent Claim 4, wherein a suction line (55) is connected to a suction port of the pump (34), and wherein the overflow line (56; 65) and the suction line (55) are guided in such a way that the spacing between the free end of the suction line (55) outside the enclosure (31) and that end of the overflow line (56; 65) situated outside the enclosure (31) is, as viewed in a horizontal direction, larger than the spacing which the overflow line (56; 65) has in the region of its passage through the enclosure (31) to the suction line (55) .

6. Device according to Patent Claim 5, wherein the suction line (55) of the pump (34) and the overflow line (56), proceeding from the passage of the overflow line (56) through the enclosure (31), initially run parallel to one another, and an end portion of the overflow line (56) is bent away from the suction line (55).

7. Device according to Patent Claim 5, wherein the overflow line (65) is formed by a flexible hose.

8. Device according to one of Patent Claims 1 to 7, wherein the pump (34) is arranged within the enclosure (31) below the hydraulic oil level, and a suction line (55) of the pump (34) passes to the outside through a passage in the enclosure (31).

9. Device according to Patent Claim 8, wherein the passage of the suction line (55) is sealed off by means of an elastically yielding seal.

10. Device according to a preceding patent claim, wherein the hydraulic oil conveyed by the pump (34) passes to the nozzle (38) via a hydraulic block (36), and wherein a pressure line (57) passing from the pump (34) to the hydraulic block (36) is in the form of a hose.

11. Device according to a preceding patent claim, wherein a pressure sensor (47) by which the pressure upstream of the nozzle (38) is detected is provided.

12. Device according to a preceding patent claim, wherein a pressure-limiting valve (45) is connected to the fluid path passing from the pump (34) to the nozzle (38) .

13. Device according to a preceding patent claim, wherein a hydraulic block (36) in which or at which the nozzle (38) and/or the pressure-limiting valve (45) and/or the pressure sensor (47) and/or a valve (46) for unpressurized circulation are/is situated is mechanically connected in an elastic manner to further components (30).

14. Device according to a preceding patent claim, wherein there is provided a mounting flange (30) to which at least the enclosure (31), the nozzle (38), along with the component forming the flow channel (39), and in particular also the pump (34) and the hydraulic block (36) are fastened.

15. Device according to a preceding patent claim, wherein a joining point between the nozzle (38) and the flow channel (39) is sealed off.

## Revendications

1. Dispositif pour dégazer de l'huile hydraulique et destiné à être disposé sur ou au niveau d'un réservoir d'huile hydraulique, comprenant une unité d'entraînement (32) qui comporte un moteur (33) et une pompe (34) pouvant être entraînée par le moteur (33), à partir de laquelle de l'huile hydraulique à dégazer s'écoule par une buse (38) à laquelle se raccorde un canal d'écoulement (39) présentant une section transversale sensiblement plus grande que la section transversale de débit de la buse (38), dans lequel l'unité d'entraînement (32), la buse (38) et le canal d'écoulement (39) sont rassemblés en un module de dégazage (11) pouvant être manipulé dans son ensemble, dans lequel, pour la pièce formant le canal d'écoulement (39), une enceinte (31) remplie de l'huile hydraulique est prévue, laquelle enceinte comporte une ouverture vers l'environnement, via laquelle des bulles de gaz se formant parviennent dans l'environnement, dans lequel une extrémité du canal d'écoulement (39) pénètre dans l'huile hydraulique se trouvant dans l'enceinte (31), huile dont le niveau est maintenu constant dans l'enceinte (31) au moyen d'une conduite de trop-plein (56 ; 65), dans lequel une unité de dégazage (37) comportant la buse (38) et le canal d'écoulement (39) pénètre amplement dans l'huile hydraulique, dans lequel la conduite de trop-plein (56 ; 65) est guidée vers l'extérieur à partir de l'intérieur de l'enceinte (31) à travers un passage.

2. Dispositif selon la revendication 1, dans lequel les bulles de gaz se formant parviennent directement dans l'atmosphère via l'ouverture.

3. Dispositif selon la revendication 2, dans lequel un ventilateur est associé à l'ouverture, lequel refoule le gaz depuis l'espace intérieur de l'enceinte (31) en direction de l'environnement.

4. Dispositif selon la revendication 1, dans lequel la conduite de trop-plein (56 ; 65) se termine en dessous de l'enceinte (31).

5. Dispositif selon la revendication 4, dans lequel une conduite d'aspiration (55) est raccordée à un raccord d'aspiration de la pompe (34), et dans lequel la conduite de trop-plein (56 ; 65) et le raccord d'aspiration (55) sont guidés de telle sorte que la distance entre l'extrémité libre de la conduite d'aspiration (55) à l'extérieur de l'enceinte (31) et l'extrémité de la conduite de trop-plein (56 ; 65) se trouvant à l'extérieur de l'enceinte (31) est, considérée dans une direction horizontale, supérieure à la distance que présente la conduite de trop-plein (56 ; 65), dans la région de son passage à travers l'enceinte (31), par rapport à la conduite d'aspiration (55).

6. Dispositif selon la revendication 5, dans lequel la conduite d'aspiration (55) de la pompe (34) et la conduite de trop-plein (56) s'étendent tout d'abord parallèlement l'une à l'autre à partir du passage de la conduite de trop-plein (56) à travers l'enceinte (31) et une partie d'extrémité de la conduite de trop-plein (56) est courbée de manière à s'éloigner de la conduite d'aspiration (55).

7. Dispositif selon la revendication 5, dans lequel la conduite de trop-plein (65) est formée par un tuyau flexible.

8. Dispositif selon l'une des revendications 1 à 7, dans lequel la pompe (34) est disposée à l'intérieur de l'enceinte (31) en dessous du niveau d'huile hydraulique et une conduite d'aspiration (55) de la pompe (34) sort vers l'extérieur à travers un passage dans l'enceinte (31) .

9. Dispositif selon la revendication 8, dans lequel le passage de la conduite d'aspiration (55) est rendu étanche au moyen d'un joint d'étanchéité fléchissant de manière élastique.

10. Dispositif selon l'une des revendications précédentes, dans lequel l'huile hydraulique refoulée par la pompe (34) parvient jusqu'à la buse (38) par le biais d'un bloc hydraulique (36), et dans lequel une conduite sous pression (57) menant de la pompe (34) au bloc hydraulique (36) est réalisée sous forme de tuyau.

11. Dispositif selon l'une des revendications précédentes, dans lequel un capteur de pression (47) est prévu, à l'aide duquel la pression en amont de la buse (38) est détectée.

12. Dispositif selon l'une des revendications précédentes, dans lequel une soupape de limitation de pression (45) est raccordée au trajet de fluide menant de la pompe (34) à la buse (38).

13. Dispositif selon l'une des revendications précédentes, dans lequel un bloc hydraulique (36), dans lequel ou au niveau duquel se trouvent la buse (38) et/ou la soupape de limitation de pression (45) et/ou le capteur de pression (47) et/ou une soupape (46) pour une circulation sans pression, est relié mécaniquement de manière élastique à d'autres pièces (30).

14. Dispositif selon l'une des revendications précédentes, dans lequel une bride de montage (30) est présente, bride à laquelle sont fixés au moins l'enceinte (31), la buse (38), y compris la pièce formant le canal d'écoulement (39), et en particulier également la pompe (34) et le bloc hydraulique (36).

15. Dispositif selon l'une des revendications précédentes, dans lequel une jointure entre la buse (38) et le canal d'écoulement (39) est rendue étanche.
